# EUROPÄISCHE PATENTSCHRIFT

(11) **EP 3 760 892 B1**
(45) Veröffentlichungstag und Bekanntmachung des Hinweises auf die Patenterteilung: **20.04.2022**
(21) Anmeldenummer: 20181977.8
(22) Anmeldetag: 24.06.2020
(51) Int. Cl.: F16D 65/22

(54) **LAMELLENBREMSE FÜR EINEN FAHRZEUGANTRIEB UND EIN FAHRZEUGANTRIEB**
MULTIPLE DISC BRAKE FOR VEHICLE DRIVE UNIT
FREIN À DISQUES MULTIPLES POUR DISPOSITIF D'ENTRAÎNEMENT DE VÉHICULE

(30) Priorität: 04.07.2019 CH 8822019
(43) Veröffentlichungstag der Anmeldung: 06.01.2021
(73) Patentinhaber: I&W Engineeering AG, 8645 Jona (CH)
(72) Erfinder: Iklé, Adrian, 8645 Jona (CH)
(74) Vertreter: Keller Schneider Patent- und Markenanwälte AG

(56) Entgegenhaltungen:
- EP-A1- 1 914 154
- EP-A2- 1 001 508
- EP-A2- 2 135 767
- WO-A1-2006/033149
- DE-U1-202012 000 897
- JP-A- H03 209 030
- US-A- 2 729 310

## Beschreibung

### Technisches Gebiet

Die vorliegende Erfindung beschreibt eine Lamellenbremse als Park-bzw. Notfall-Bremse, einbaubar in einen Innenraum eines Antriebsträgers eines Fahrzeugantriebs, umfassend einen ringförmigen Bremsspulenhalter mit einer aufgewickelten Bremsspule, eine Ankerplatte mit einem Lamellenträger an welchem eine Mehrzahl von Ankerplattenlamellen befestigt ist, wobei eine Druckfeder eine lineare Beabstandung des Bremsspulenhalters zur linear bewegbare Ankerplatte aus einem ferromagnetischen Material in einer Bremsstellung der Lamellenbremse bewerkstellig und bei Strombeaufschlagung der Bremsspule eine Gelöststellung der Lamellenbremse durch Anziehung der Ankerplatte in Richtung des Bremsspulenhalters erzeugbar ist, wobei die Bremswirkung durch das Zusammenwirken der Ankerplattenlamellen mit Antriebswellenlamellen an einer Antriebswelle entsteht, einen Fahrzeugantrieb für Fahrzeuge mit Drehmomenten grösser 800Nm und Geschwindigkeiten kleiner 60km/h, umfassend ein Antriebsgehäuse mit einem Antriebsträger, einem Motorträger, in welchem ein Elektromotor angeordnet ist und einen Getriebeträger, in welchem ein Getriebe angeordnet ist, wobei der Elektromotor und das Getriebe über eine Antriebswelle verbunden angeordnet sind und die Verwendung eines ferromagnetischen Antriebsträgers als Teil einer Lamellenbremse.

### Stand der Technik

Die vorliegende Anmeldung befasst sich mit Fahrzeugantrieben für Fahrzeuge mit hohen Drehmomenten und kleinen Geschwindigkeiten. Dabei liegen die Höchstgeschwindigkeiten der Fahrzeuge mit derartigen Fahrzeugantrieben bei maximal 60 km/h und die Drehmomente grösser 800 Nm. Typische Anwendungen liegen im Bereich Landwirtschaftsfahrzeuge, Roboter, Baumaschinen, wie Steinbrecher, Hebebühnen oder Tunnelbaumaschinen und andere Industriefahrzeuge z.B. Transportplattformen.

Bei all diesen Anwendungen ist der Bauraum des Fahrzeugantriebs ein entscheidender Faktor. Dabei soll der Fahrzeugantrieb so kurz wie möglich sein, um die Manövrierfähigkeit des Fahrzeugs nicht zu beeinträchtigen oder überhaupt erst zu ermöglichen, dies kann beispielsweise beim Einsatz in Plantagen nützlich sein. Weiter soll der Fahrzeugantrieb, beispielsweise bei Kettenfahrzeugen seitlich nicht vorstehen. Aus Sicherheitsgründen weisen all diese Fahrzeuge zwingend eine Bremse, als Park- bzw. Notfall-Bremse auf.

Die Park- bzw. Notfall-Bremse ist im unbetätigten Zustand der Bremse angezogen und muss zum Fahren des Fahrzeugs betätigt, also gelöst werden. Dazu muss ein ausreichend hoher magnetischer Fluss bzw. hohes Magnetfeld durch einen Stromfluss erzeugt werden.

Aus der US463246 ist ein derartiger Fahrzeugantrieb als hydraulischer Antrieb bekannt. Hier weist der Fahrzeugantrieb einen Flansch zum Befestigen an einem Fahrzeug auf und einen weiteren Flansch für den Abtrieb. Der Fahrzeugantrieb wird von einem Antriebsgehäuse gebildet. Im Inneren des Antriebsgehäuses bzw. mindestens teilweise hineinragend befindet sich ein Hydraulikmotor. Vollständig innerhalb des Antriebsgehäuses befinden sich unter anderem eine Bremse und ein Getriebe. Um Platz zu sparen ist die Bremse zwischen dem Getriebe und dem Hydraulikmotor angeordnet. Eine einfache Umstellung von hydraulischen Antrieben auf heute gewünschte Fahrzeugantriebe mit Elektromotor, scheint nur auf den ersten Blick einfach. Ein einfaches Ersetzen des Hydraulikmotors durch einen Elektromotor bei Nutzung bekannter Park- bzw. Notfall-Bremsen scheint nicht möglich, ohne grössere Antriebsgehäuse zu bauen oder den Innenraum des Antriebsgehäuses inklusive der innen liegenden Bauteile vollständig umzugestalten, um auch eine ausreichend funktionierende Park-bzw. Notfallbremse zu erreichen, die in das Antriebsgehäuse mit gleichem Bauraum passt.

Problematisch ist die Erreichung eines kompakten Antriebsgehäuses bei Anordnung einer Park- bzw. Notfall-Bremse mit gewünschter bekannter Bremswirkung. In der EP1914154 ist ein Fahrzeugantrieb mit einem Antriebsgehäuse gezeigt, in welchem ein Elektromotor und zwei hintereinander angeordnete elektromagnetische Bremsen eingesetzt werden. Diese Bremsen sind als Lamellenbremsen ausgestaltet und könnten auch als Park- und Notfall-Bremse betrieben werden. Die Lamellenbremse umfasst ein Bremsengehäuse und typische jochartige Bremsspulenhalter, in welche die Bremsspulen eingebaut sind. Mit mehreren derartigen Lamellenbremsen ist nur eine vergrösserte, nicht kompakte Bauform des Antriebsgehäuses erreichbar bzw. das Antriebsgehäuse ist zwangsläufig ausladender gestaltet, da die gesamte Bremse auch noch in ein Bremsengehäuse eingebaut ist. Im Antriebsgehäuse der EP1914154 sind zusätzlich mehrere grössere Leerräume erkennbar, sodass das Platzangebot nicht optimal ausgenutzt ist. Ob die gewünschte Bremswirkung mit den beiden elektromagnetischen Bremsen erreicht wird, scheint zusätzlich fraglich.

Die Verwendung einer elektromagnetischen Bremse mit "Magnettopf" bzw. der typischen jochartigen Gestaltung der Bremsspulenhalter ist typisch. Um ein höheres Drehmoment und eine lange Lebensdauer zu erreichen, bietet sich eine Lamellenbremse mit mehreren metallischen Scheiben an, welche eine Antriebswelle über eine Ankerplatte bremsen. Lamellenbremsen sind vorteilhaft, da sie nur einen geringen Verschleiss aufweisen, nahezu wartungsfrei sind und damit betriebssicher und langlebig sind.

Erste Versuche haben keine ausreichend hohe gewünschte Bremswirkung durch handelsübliche Lamellenbremsen erzielt. Bei Verwendung einer Lamellenbremse konnte trotz möglichst grossflächiger Ausgestaltung der Bremsspule und sehr dünner Lamellen der Lamellenbremse, bisher in dem vorhandenen Bauraum kaum ein ausreichendes Bremsmoment erzeugt werden. Der limitierende Faktor ist dabei die magnetische Kraft, welche benötigt wird, um die Bremse zu lösen. Es muss ein ausreichend grosser magnetischer Fluss durch die Bremsspulen erreicht werden, der die Ankerplatte zum Bremsspulenhalter bzw. zur Bremsspule hin anzieht, wodurch die Lamellen und damit die Lamellenbremse gelöst werden.

Die einfachste Lösung zur Erreichung eines stärkeren magnetischen Flusses wäre eine Verlängerung der Bremse mit derart vielen Lamellen, dass die gewünschte höhere Bremswirkung erreicht wird. Dies verlängert aber das komplette Antriebsgehäuse extrem. Auch die Vergrösserung des Durchmessers der Bremse bzw. der Bremsspulenhalter und der Bremsspule bedingt auch nur eine Vergrösserung des Antriebsgehäuses, was ebenfalls ungewünscht ist.

Um Platz zu sparen wurde in EP2135767 die Bremse mit einem Bremsgehäuse und jochartigen Bremsspulenhaltern in das Antriebsgehäuse verlegt.

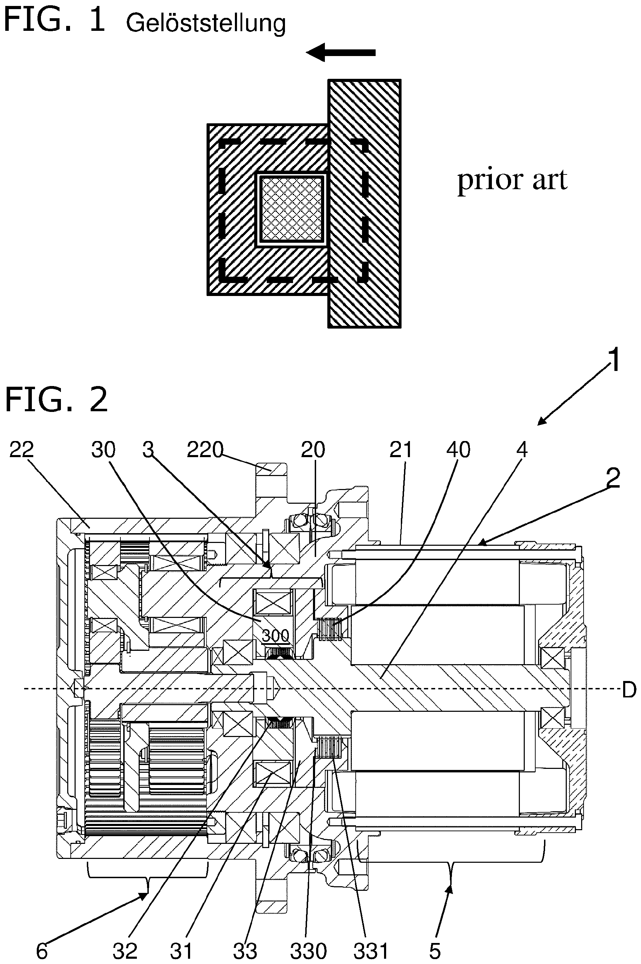

Ein typischer jochartiger Bremsspulenhalter mit Bremsspule, die eine quadratische Querschnittsfläche aufweist, ist in Figur 1 schematisch gezeigt. Der jochartige Bremsspulenhalter ist u-förmig gestaltet und weist drei Schenkel auf, die die im Inneren eingelassenen Wicklungen dreiseitig umgeben. Diese Schenkel müssen einen Mindestquerschnitt aufweisen, dass die Magnetfeldsättigung innerhalb der ferromagnetischen Schenkel nicht zu klein ist. An der offenen Seite des u-förmigen Bremsspulenhalters ist die Ankerplatte im angezogenen Zustand gezeigt, wobei in der Praxis so die Lamellenbremse gelöst ist. Angezogen wird die Ankerplatte durch einen Stromfluss durch die Bremsspule, welcher ein Magnetfeld induziert. Die Feldlinien sind hier strichliniert angedeutet. Da der u-förmige Bremsspulenhalter und die Ankerplatte aus einem ferromagnetischen Material hergestellt sind, wird ein geschlossener magnetischer Rückschluss erreicht und bei ausreichend hohem magnetischen Fluss, kann die Ankerplatte zum u-förmigen Bremsspulenhalter gezogen werden.

Aus dem Stand der Technik sind weiter vergrösserte u-förmige Bremsspulenhalter für vergrösserte Bremsspulen bekannt, welche immer mehr Platz im Antriebsgehäuse einnehmen. Der magnetische Fluss hängt von der Querschnittsfläche der Bremsspule ab und von der Dicke der Schenkel des Bremsspulenhalters. Dies scheint zwingend nötig, da bei zu kleinem Querschnitt der Bremsspule kein ausreichend hoher magnetischer Fluss erreichbar ist. Um eine derartig vergrösserte Bremse im Antriebsgehäuse zu platzieren, muss das Antriebsgehäuse stark vergrössert werden.

Das mit einer als federbetätigte elektromagnetische Lamellenbremse ausgeführten Park- bzw. Notfall-Bremse muss das erzeugbare Bremsmoment mindestens gleich gross sein, wie das höchstmögliche Antriebsmoment des Elektromotors. Nur nach erfolgreichem lösen der Lamellenbremse soll der Elektromotor die Antriebswelle des Fahrzeugantriebs in Bewegung versetzen. Da der Bauraum innerhalb des Antriebsgehäuses stark begrenzt ist, ist eine Park- bzw. Notfall-Bremse nur erreichbar, wenn u-förmige Bremsspulenhalter und eingelegte Bremsspulen vergrössert werden. Bei Vergrösserung der Bremsbauteile wird auch ein die Lamellenbremse umgebendes Bremsgehäuse immer grösser, sodass der Aufbauraum der Lamellenbremse zwingend grösser wird, wenn eine höhere Magnetkraft erreicht werden soll.

### Darstellung der Erfindung

Die oben beschriebenen aus dem Stand der Technik bekannten Nachteile, sollen durch die vorliegende Vorrichtung beseitigt werden. Die vorliegende Erfindung hat sich zur Aufgabe gestellt eine Lamellenbremse mit verkleinertem Platzbedarf sowie einen Fahrzeugantrieb mit einer verkleinerten Lamellenbremse, welcher in einem kompakten möglichst kleinen Antriebsgehäuse unterbringbar ist, in welchem auch ein Elektromotor angeordnet ist.

Das mit der Lamellenbremse erreichbare Bremsmoment soll mindestens gleich gross wie das höchstmögliche Antriebsmoment des Elektromotors sein.

Die Gestaltung des Antriebsgehäuses soll sich im besten Fall bei Auswechslung eines Hydraulikmotors mit einem Elektromotor nicht unterscheiden, sodass auch vorhandene Fahrzeuge mit einem Fahrzeugantrieb auf Basis eines Hydraulikmotors mit dem Antriebsgehäuse samt Elektromotor und elektromagnetischer Lamellenbremse umgerüstet werden können.

Zur Lösung der Aufgabe schlägt diese Erfindung vor, die gesamte Lamellenbremse gehäuselos auszugestalten, also ohne ein, die gesamte Lamellenbremse umschliessendes Gehäuse. Zusätzlich ist die Form bzw. Querschnittsfläche der Bremsspulenhalter verändert und die magnetischen Feldlinien werden durch die Wand eines ferrromagnetischen Einsatzes geführt, wodurch eine ausreichend hohe Bremswirkung, also Anziehwirkung auf die Ankerplatte, erreichbar ist.

Variationen von Merkmalskombinationen bzw. geringfügige Anpassungen der Erfindung sind in der Detailbeschreibung zu finden, in den Figuren abgebildet und in die abhängigen Patentansprüche aufgenommen worden.

### Kurze Beschreibung der Zeichnungen

Der Erfindungsgegenstand wird nachstehend detailliert im Zusammenhang mit den anliegenden Zeichnungen beschrieben. Notwendige Merkmale, Einzelheiten und Vorzüge der Erfindung ergeben sich aus dieser nachfolgenden Beschreibung, wobei eine bevorzugte Ausführungsform der Erfindung und einige Zusatzmerkmale oder optionale Merkmale im Detail aufgeführt sind.
- Figur 1: zeigt eine schematische Schnittansicht eines aus dem Stand der Technik bekannten Bremsspulenhalters in u-Form mit einer Bremsspule, welcher zusammen mit einer Ankerplatte ein Joch für den magnetischen Rückschluss bildet.
- Figur 2: zeigt einen Längsschnitt eines Fahrzeugantriebs mit einem Antriebsgehäuse umfassend einen Antriebsträger, einen Motorträger und einen Getriebeträger, wobei sich eine Lamellenbremse in einer Bremsstellung befindet, während
- Figur 3: einen Längsschnitt durch den Antriebsträger und die Bauteile der Lamellenbremse in Bremsstellung zeigt.
- Figur 4: zeigt eine schematische Schnittansicht durch die eingebaute Lamellenbremse im Bereich eines Bremsspulenhalters, wobei die Lamellenbremse in einer Gelöststellung steht.

### Beschreibung

Ein kompletter Fahrzeugantrieb 1, umfasst ein Antriebsgehäuse 2, welches einen Antriebsträger 20, einen Motorträger 21 und einen Getriebeträger 22 umfasst. Der Antriebsträger 20 ist das zentrale Bauteil, welches an einem Fahrzeug fixiert wird und wie der Motorträger 21 unbewegbar ist. Im Antriebsträger 20 ist ein Bremsraum ausgespart, in welchem eine Lamellenbremse 3 als Park- bzw. Notfall-Bremse gelagert ist. Eine Antriebswelle 4 quert den Antriebsträger 20, Motorträger 21 und den Getriebeträger 22. An der Wand des rotierbaren Getriebeträgers 22, der auch als Trommel bezeichnet werden kann, ist ein Ankuppelflansch 220 zur Befestigung von beispielsweise Ketten, angeordnet.

Im Innenraum des Motorträgers 21 ist ein Elektromotor 5 angeordnet, welcher einen dem Fachmann bekannten Aufbau aus einem Rotorteil und einem Statorteil aufweist. Der Betrieb und die Steuerung des Elektromotors 5 wird durch bekannte Verkabelungen und eine nicht dargestellte Steuerelektronik vorgenommen, wobei der Elektromotor 5 üblicherweise durch mindestens einen Sensor überwacht wird. Der Elektromotor 5 treibt die zentrisch querende Antriebswelle 4 an. Die Abmessungen des Elektromotors 5 sind auf die Masse des Motorträgers 21 abgestimmt, wobei möglichst keine Leerräume belassen werden. Damit die Antriebswelle 4 möglichst reibungsfrei rotieren kann, sind zwischen Motorträger 21 und Antriebsträger 20 geeignete Lager angebracht, in der Regel Kugellager, auf die hier nicht weiter eingegangen wird.

Im Innenraum des Getriebeträgers 22 ist ein Getriebe 6, insbesondere als Planetengetriebe ausgebildet, mit der Antriebswelle 4 wirkverbunden angeordnet. Das Getriebe 6 ist mit der Antriebswelle 4 verbunden. Dadurch kann der Getriebeträger 22 in unterschiedlichen Betriebsarten gesteuert, relativ zum Antriebsträger 20 und Motorträger 21 rotiert werden. Das Abbremsen des Antriebswelle 4 bzw. des Getriebeträgers 22 kann im Betrieb durch die Steuerung des Elektromotors 5 durchgeführt werden. Die im Folgenden beschriebene Park- bzw. Notfallbremse dient als Totmanneinrichtung, sodass nur bei Betätigung der Park- bzw. Notfallbremse ein Drehmoment auf die Antriebswelle 4 übertragbar ist, also der Getriebeträger 22 nur dann rotierbar ist. Nur, wenn die Park- bzw. Notfallbremse betätigt, also gelöst wird, bewegt sich der Fahrzeugantrieb 1.

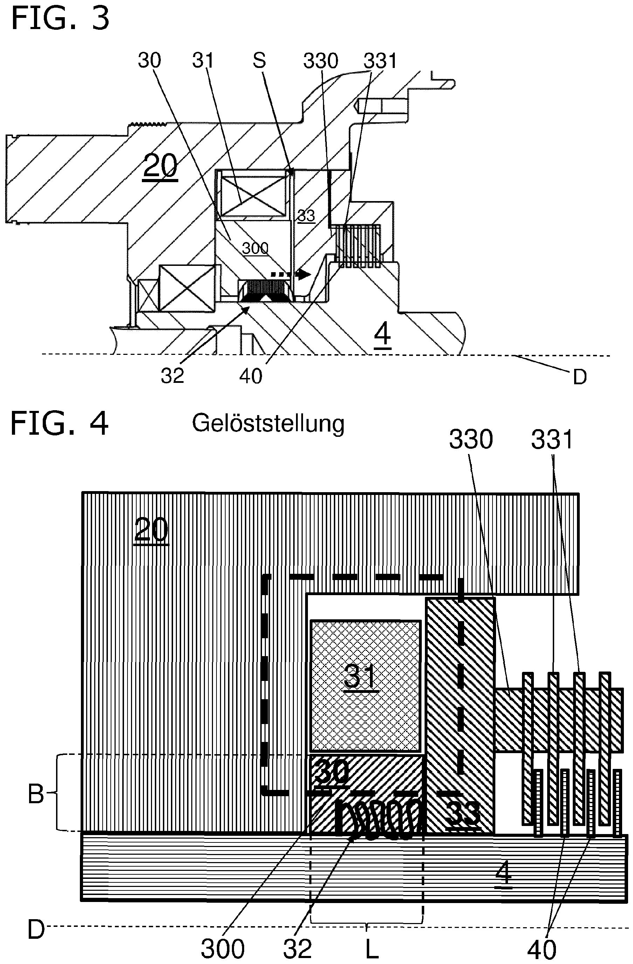

Wie in Figur 3 gezeigt, umfasst die Lamellenbremse 3 einen ringförmigen Bremsspulenhalter 30. Dieser ist auf die Antriebswelle 4 aufsteckbar, sodass die Antriebswelle 4 in einer zentrischen Aussparung des Bremsspulenhalters 30 rotieren kann. Die gesamte Lamellenbremse 3 ist zwischen der Antriebswelle 4 und dem umgebenden Antriebsträger 2, welcher auch aus einem ferromagnetischen Material hergestellt ist, angeordnet. In der Bremsstellung ist ein Spalt S zwischen Ankerplatte 33 und Bremsspulenhalter 30 ausgebildet. Die Ankerplatte 33 ist bewegbar auf der Antriebswelle 4 gelagert.

Der Bremsspulenhalter 30 hat in seinem Verlauf eine im Wesentlichen rechteckförmige Bremsspulenhalterfläche 300. Im Gegensatz zum u-förmigen Bremsspulenhalter aus dem Stand der Technik mit drei Schenkeln, weisen die Bremsspulenhalter 30 hier nur einen Schenkel mit der im Wesentlichen rechteckförmigen Bremsspulenhalterfläche 300 auf. Der Bremsspulenhalter 30 und die am Bremsspulenhalter 30 angeordnete Bremsspule 31 umgibt die Antriebswelle 4 konzentrisch. Dabei ist der Bremsspulenhalter 30 aus ferromagnetischem Material hergestellt, sodass ein magnetischer Fluss hindurchgehen kann. Um den Bremsspulenhalter 30 herum, entlang einer Aussenseite des Bremsspulenhalters 30 ist eine Bremsspule 31 mit einer Vielzahl von Wicklungen, vom Zentrum des Bremsspulenhalters 30 und damit von der Antriebswelle 4 weg, angeordnet. Der zur Verfügung stehende Wickelraum wird bevorzugt mit einem möglichst hohen Füllfaktor gewickelt ausgenutzt, sodass hohe magnetische Feldstärken aufgrund maximal vieler Wicklungen erreichbar sind. Derartige Bremsspulen 31 weisen üblicherweise Kupferlackdraht auf.

Zur vereinfachten Anordnung der Bremsspule 31 ist hier ein U-Profil aus einem nicht-ferromagnetischen Material am Bremsspulenhalter 30befestigt, in welchem die Wicklungen fixiert werden. Dies ist aber nicht zwingend nötig.

Entlang des kreisförmigen Umfangs des ringförmigen Bremsspulenhalters 30 ist hier mindestens eine Druckfeder 32 angeordnet, welche unterschiedlich ausgeführt sein kann. Die Druckfeder 32 drückt eine Ankerplatte 33 mit einem Lamellenträger 330 und einer Mehrzahl von Ankerplattenlamellen 331 in axialer Richtung vom Bremsspulenhalter 30 weg. Der Bremsspulenhalter 30 und die Ankerplatte 33 sind entsprechend bewegbar zueinander gestaltet, wobei durch die Anordnung in einem Bremsraum des Antriebsträgers 20 nur eine lineare Bewegung in Richtung der Drehachse D der Antriebswelle 4 möglich ist. Die Ankerplatte 33, der Lamellenträger 330 und die Ankerplattenlamellen 331 sind im Wesentlichen ringförmig gestaltet und verlaufen konzentrisch um die Antriebswelle 4.

An der Antriebswelle 4 sind in Höhe der Ankerplattenlamellen 331 Antriebswellenlamellen 40 fixiert angeordnet.

Wird die Lamellenbremse 3 als Park- bzw. Notfall-Bremse nicht betätigt, befindet sich also in Bremsstellung, drückt die Druckfeder 32 die Ankerplatte 33 und damit die Ankerplattenlamellen 331 axial in Richtung Motorträger 21. Dabei wird ein Spalt zwischen Bremsspulenhalter 30 und Ankerplatte 33 ausgebildet und die Ankerplattenlamellen 331 drücken gegen die Antriebswellenlamellen 40, wodurch die Antriebswelle 4 gebremst ist. Eine Rotation der Antriebswelle 4 wird dabei verhindert, wobei natürlich die Federkraft der Druckfeder 32 entsprechend gross sein muss. Die Antriebswelle 4 ist rein rotativ bewegbar gelagert, sodass die Anordnung der Antriebswellenlamellen 40 relativ entlang der Drehachse D fixiert bleibt.

Wird die Lamellenbremse 3 betätigt, also in eine Gelöststellung gebracht, so wird die Bremsspule 31 mit einer nicht gezeigten Steuervorrichtung und Verkabelung mit einer elektrischen Spannung beaufschlagt, sodass ein resultierender Stromfluss ein Magnetfeld induziert. Die Feldlinien sind angedeutet. Durch die Magnetfeldstärke bzw. den magnetischen Fluss, wird die Ankerplatte 33 samt Ankerplattenlamellen 331 axial in Richtung der Feldlinien bzw. der Bremsspule 31 gegen die Kraft der Druckfeder 32 gezogen. Durch die lineare relative Verschiebung der Ankerplattenlamellen 331 zu den Antriebswellenlamellen 40, wird die Antriebswelle 4 freigegeben. Nur, wenn die Lamellenbremse 3 in der Gelöststellung ist, kann die Antriebswelle 4 rotieren.

Da der Bremsspulenhalter 30 ringförmig ist, wird hier nur ein Teil der Schnittansicht durch die Lamellenbremse 3 im Detail angeschaut. Die Beschreibung gilt für den gespiegelten Abschnitt der Lamellenbremse 3 auf der gegenüberliegenden Seite der Antriebswelle 4 entsprechend.

Im Gegensatz zum Stand der Technik wird der Bremsspulenhalter nicht als Ring mit im Wesentlichen u-förmigen Profil ausgestaltet. Es wurde erkannt, dass eine vereinfachte Querschnittsfläche des Bremsspulenhalters 30 ausreicht, wenn andere Bauteile entsprechend hergestellt und angeordnet werden.

In der Bremsstellung drückt die Druckfeder 32 die Ankerplatte 33 vom Bremsspulenhalter 30 und der Bremsspule 31 linear axial weg, wodurch der Lamellenträger 330 an der Ankerplatte 33 axial weggedrückt wird und die Ankerplattenlamellen 331 drücken auf die Antriebswellenlamellen 40 an der Antriebswelle 4.

Wird die Lamellenbremse 3 gelöst, also durch Strombeaufschlagung betätigt, dann wird ein Magnetfeld induziert und ein magnetischer Rückschluss bildet sich um die Bremsspule 31 aus, wobei die Feldlinien, wie in Figur 4 gestrichelt angedeutet, durch einen Teil der Wand des Antriebsträgers 20, den Bremsspulenhalter 30 und die Ankerplatte 33 verlaufen. Der magnetische Rückschluss ist in Form eines geschlossenen magnetischen Kreises durch den Bremsspulenhalter 30, die Wand des ferromagnetischen Antriebsträgers 20, welcher die Bremsspule 31 und den Bremsspulenhalter 30 umgibt und die ferromagnetische Ankerplatte 33 ausbildbar.

Da die Querschnittsfläche der Bremsspule 31 hier in Relation zur Querschnittsfläche des Bremsspulenhalters 30 hier grösser ist, wird vergrösserter magnetischer Fluss ausgebildet und eine hohe Bremswirkung erzielt. Dabei ist die Summe der Querschnittsflächen der Bremsspule 31 und des Bremsspulenhalters 30 gleich geblieben. Zur Erreichung der höheren Bremswirkung, wird der Bremsspulenhalter 30 nur mit einem linearen Schenkel versehen, die Querschnittsfläche der Bremsspule 31 erhöht und die Bremsspule zwei seitig von der Wand des ferromagnetischen Antriebsträgers 20 umgeben.

Auch, wenn die Wand des ferromagnetischen Antriebsträgers 20 nicht direkt an der Bremsspule 31 anliegt, wird der magnetische Rückschluss wie in Figur 4 gezeigt, ausgebildet.

Das Joch zur Ausbildung des maximierten magnetischen Flusses um die Bremsspule 31 wird hier durch den ferromagnetischen Bremsspulenhalter 30 mit rechteckförmiger Bremsspulenhalterfläche 300 und einem Teil der Wand des ferromagnetischen Antriebsträgers 20 und die Ankerplatte 33 gebildet. Mit einem solchen mindestens dreiteiligen Joch, kann die Magnetkraft bzw. die magnetische Anziehungswirkung erhöht werden, da die Querschnittsflächen der Einzelteile im Vergleich zum Stand der Technik vergrössert sind.

Wie in Figur 4 angedeutet, kann eine axiale Länge L des Bremsspulenhalters 30 und eine Breite B des Bremsspulenhalters 30 definiert werden. Da hier der Bremsspulenhalter 30 bevorzugt nur einen Schenkel, mit rechteckförmiger Bremsspulenhalterfläche 300 aufweist, kann dieser hier genauso lang ausgestaltet sein, wie eine Länge der Bremsspule 31.

Ein Teil der Wand des Antriebsträgers 20 umgibt den Bremsspulenhalter 30 einseitig und die Bremsspule 31 zweiseitig, wodurch das Joch für den magnetischen Fluss gebildet wird. Es kann jeweils ein geringer Spalt zwischen der Wand des Antriebsträgers 20 und den Oberflächen des Bremsspulenhalters 30 und der Bremsspule 31 resultieren. Damit die Ankerplatte 33 linear bewegbar ist, darf diese nicht an der Wand des Antriebsträgers 20 fixiert sein.

Aufgrund der Gestaltung des Jochs kann die axiale Länge der Bremsspule 31 höchstens 10% kleiner, als die axiale Länge L des Bremsspulenhalters 30 gewählt sein. Entsprechend ist eine höhere magnetische Flussdichte aufgrund der grösseren Bremsspule 31 erreichbar.

Damit der Bremsspulenhalter 30, die Ankerplatte 33 und der Teil der Wand des Antriebsträgers 20 nicht zu früh magnetisch gesättigt werden, sollten die Abmessungen möglichst gross sein, wobei die geringste Breite der limitierende Faktor ist. Die Breiten der Wand des Antriebsträgers 20, der Ankerplatte 33 und des Bremsspulenhalters 30 sollten bestensfalls gleich gross sein.

Im Unterschied zum Stand der Technik ist die vorliegende Lamellenbremse 3 gehäuselos ausgeführt, da die Bremsenbauteile 30, 31, 32, 33 nicht in ein Bremsgehäuse eingefasst sind. Auf ein Bremsgehäuse wird absichtlich verzichtet, wodurch ein verringerter Bauraum für die Lamellenbremse 3 im Bremsraum nötig ist.

Die Lamellenbremse 3 bzw. der Bremsraum innerhalb des Antriebsträgers 20 ist hier trocken ausgeführt. Durch Befüllung des Bremsraums mit Öl könnte die Lamellenbremse 3 aber "nass" betrieben werden, wodurch die Verschleissbeständigkeit noch erhöht wäre.

Die hier gezeigte Lamellenbremse 3 weist ein mehrteiliges Joch aus Bremsspulenhalter 30 und Antriebsträger 20 auf, in welchem durch eingelegte Wicklungen einer Bremsspule 31 bei Strombeaufschlagung ein optimierter Elektromagnet mit verstärktem Magnetfeld auf gleich grosser Querschnittsfläche erreicht ist. Durch die Aufteilung des Joches wird der magnetische Fluss grösser, als in einem bekannten zusammenhängenden Joch.

In einer Abwandlung kann die Bremsspule 31 von einem nicht-ferromagnetischen Profil am Bremsspulenhalter 30 gehalten werden, was in Figur 3 angedeutet ist. Da ein solches Profil nichts zur Magnetwirkung oder Bremswirkung beiträgt, ist es aus nicht ferromagnetischem Material hergestellt. Es dient nur der Halterung der Wicklungen auf dem Bremsspulenhalter 30.

In einer abgewandelten Form kann der Bremsspulenhalter 30 auch zwei Schenkel aufweisen und in etwa eine L-förmige Ausgestaltung haben. Auch hier verläuft die Bremsspule 31 auf einem Schenkel aufliegend, wobei eine Seitenwand neben der Bremsspule 31 aufgrund des zweiten Schenkels gebildet ist.

Der Querschnitt im Verlauf des Joches kann bevorzugt konstant sein. So könnte die Dicke des Antriebsträgers 20 dünner sein als die Dicke des Bremsspulenhalters 30.

### Bezugszeichenliste

- 1: Fahrzeugantrieb
- 2: Antriebsgehäuse
20 Antriebsträger (zentral, fixiert, ferromagnetisch)
21 Motorträger (fixiert, umschliesst Motor)
22 Getriebeträger (Trommel, rotierbar)
220 Ankuppelflansch
- 3: Lamellenbremse/ Park- bzw. Notfall-Bremse
30 Bremsspulenhalter
300 Bremsspulenhalterfläche
L axiale Länge des Bremsspulenhalters
B Breite des Bremsspulenhalters
31 Bremsspule
32 Druckfeder (wenn Bremse nicht betätigt, dann bremst Druckfeder durch Pressen der Ankerplattenlamellen axial auf die Antriebswellenlamellen)
33 Ankerplatte
330 Lamellenträger
331 Ankerplattenlamellen
- 4: Antriebswelle
40 Antriebswellenlamellen
- D: Drehachse/axiale Richtung
- S: Spalt
- 5: Elektromotor Rotor/Stator
- 6: Getriebe

## Patentansprüche

1. Lamellenbremse (3) als Park- bzw. Notfall-Bremse, einbaubar in einen Innenraum eines Antriebsträgers (20) eines Fahrzeugantriebs (1), umfassend einen ringförmigen Bremsspulenhalter (30) mit einer aufgewickelten Bremsspule (31), eine Ankerplatte (33) mit einem Lamellenträger (330) an welchem eine Mehrzahl von Ankerplattenlamellen (331) befestigt ist, wobei eine Druckfeder (32) eine lineare Beabstandung des Bremsspulenhalters (30) zur linear bewegbare Ankerplatte (33) aus einem ferromagnetischen Material in einer Bremsstellung der Lamellenbremse (3) bewerkstellig und bei Strombeaufschlagung der Bremsspule (31) eine Gelöststellung der Lamellenbremse (3) durch Anziehung der Ankerplatte (33) in Richtung des Bremsspulenhalters (30) erzeugbar ist, wobei die Bremswirkung durch das Zusammenwirken der Ankerplattenlamellen (331) mit Antriebswellenlamellen (40) an einer Antriebswelle (4) entsteht, **dadurch gekennzeichnet, dass**
der Antriebsträger (20), der Bremsspulenhalter (30) und die Ankerplatte (33) aus ferromagnetischem Material hergestellt sind,
die Bremsspulenhalterfläche (300) des Bremsspulenhalters (30) und die Querschnittsfläche der Bremsspule (31) im Wesentlichen rechteckig einschenklig ausgestaltet sind und bei Einbau der Lamellenbremse (3) ein Teil der Wand des Antriebsträgers (20) die Bremsspule (31) zweiseitig und den Bremsspulenhalter (30) einseitig umgibt und
somit ein mindestens dreiteiliges Joch aus der Wand des Antriebsträgers (20), dem Bremsspulenhalter (30) und der Ankerplatte (33) gebildet wird, in welchem ein magnetischer Fluss als geschlossener magnetischer Kreis ausbildbar ist.

2. Lamellenbremse (3) als Park- bzw. Notfall-Bremse nach Anspruch 1, wobei die Lamellenbremse gehäuselos ausgebildet ist und Bremsspule (31) und Bremsspulenhalter (30) teilweise direkt an einem Teil der Wand des Antriebsträgers (20) anliegen.

3. Lamellenbremse (3) als Park- bzw. Notfall-Bremse nach Anspruch 1 oder 2, wobei eine axiale Länge der Bremsspule höchstens 10% kleiner, als die axiale Länge (L) des Bremsspulenhalters (30) ist.

4. Lamellenbremse (3) als Park- bzw. Notfall-Bremse nach einem der vorhergehenden Ansprüche, wobei die Querschnittsfläche der Bremsspule (31) grösser als die Bremsspulenhalterfläche (300) ist.

5. Lamellenbremse (3) als Park- bzw. Notfall-Bremse nach einem der vorhergehenden Ansprüche, wobei die Breite in axialer Richtung (D) der Ankerplatte (33), die Breite (B) des Bremsspulenhalters (30) senkrecht zur axialen Richtung (D) und die Dicke der Wand des Antriebsträgers (20) in axialer Richtung (D) und in einer Richtung senkrecht zur axialen Richtung (D) mindestens annähernd gleich gross sind.

6. Lamellenbremse (3) als Park- bzw. Notfall-Bremse nach einem der Ansprüche 1 und 3 bis 5, wobei die Lamellenbremse (3) gehäuselos ausgebildet ist ein Teil der Wand des Antriebsträgers (20) die Bremsspule (31) zweiseitig und den Bremsspulenhalter (30) einseitig, einen Spalt ausbildend, umgibt.

7. Lamellenbremse (3) als Park- bzw. Notfall-Bremse nach einem der vorhergehenden Ansprüche, wobei die Bremsspule (31) von einem nicht-ferromagnetischen Profil am Bremsspulenhalter (30) gehalten wird.

8. Fahrzeugantrieb (1) für Fahrzeuge mit Drehmomenten grösser 800Nm und Geschwindigkeiten kleiner 60km/h, umfassend ein Antriebsgehäuse (2) mit einem Antriebsträger (20), einem Motorträger (21), in welchem ein Elektromotor (5) angeordnet ist und einen Getriebeträger (22), in welchem ein Getriebe (6) angeordnet ist, wobei der Elektromotor (5) und das Getriebe (6) über eine Antriebswelle (4) verbunden angeordnet sind, **dadurch gekennzeichnet, dass**
eine Lamellenbremse (3) als Park- bzw. Notfall-Bremse gemäss einem der vorhergehenden Ansprüche im Antriebsträger (20) aus einem ferromagnetischen Material wirkverbunden gelagert ist, sodass bei Betätigung der Lamellenbremse (3) ein magnetischer Rückschluss in Form eines geschlossenen magnetischen Kreises durch den Bremsspulenhalter (30), die Wand des ferromagnetischen Antriebsträgers (20), welcher die Bremsspule (31) und den Bremsspulenhalter (30) umgibt und die ferromagnetische Ankerplatte (33) verlaufend ausbildbar ist.

9. Verwendung eines ferromagnetischen Antriebsträgers (20), welcher mit einer Lamellenbremse (3) gemäss Anspruch 1 wirkverbunden ist als Teil der Lamellenbremse (3), wobei in einer Gelöststellung der magnetische Fluss bei Betätigung der Lamellenbremse (3) durch einen Teil der Wand des Antriebträgers (20), die Ankerplatte (33) und den ringförmigen Bremsspulenhalter (30) verlaufend zu einem magnetischen Rückschluss geschlossen wird, wodurch die Ankerplatte (33) zum Bremsspulenhalter (30) gegen die Federkraft der Druckfeder (32) gezogen wird und eine Rotation der Antriebswelle (4) ermöglicht ist
und in einer Bremsstellung nach dem Loslassen der Lamellenbremse (3) ein Spalt (S) zwischen Ankerplatte (33) und Bremsspulenhalter (30) entsteht, wodurch die Ankerplattenlamellen (331) gegen die Antriebswellenlamellen (40) gepresst werden, sodass eine Rotation der Antriebswelle (4) verhindert ist.

## Claims

1. A multi-disc brake (3) as a parking or emergency brake, which is installable in an interior of a drive support (20) of a vehicle drive (1), comprising an annular brake coil holder (30) with a wound brake coil (31), an armature plate (33) with a disc support (330) to which a plurality of armature plate discs (331) is fastened, wherein a compression spring (32) brings about a linear spacing of the brake coil holder (30) from the linearly movable armature plate (33) made of a ferromagnetic material in a braking position of the multi-disc brake (3) and, when current is applied to the brake coil (31), a released position of the multi-disc brake (3) is creatable by attracting the armature plate (33) in the direction of the brake coil holder (30), wherein the braking effect results from the interaction of the armature plate discs (331) with drive shaft discs (40) on a drive shaft (4),
**characterised in that**
the drive support (20), the brake coil holder (30) and the armature plate (33) are made of ferromagnetic material,
the brake coil holder area (300) of the brake coil holder (30) and the cross-sectional area of the brake coil (31) are substantially of rectangular single-legged design, and when the multi-disc brake (3) is installed, a part of the wall of the drive support (20) surrounds the brake coil (31) on two sides and the brake coil holder (30) on one side, and
thereby a yoke having at least three parts is formed from the wall of the drive support (20), the brake coil holder (30) and the armature plate (33), in which a magnetic flux can be formed as a closed magnetic circuit.

2. The multi-disc brake (3) as a parking or emergency brake according to Claim 1, wherein the multi-disc brake is designed without a housing, and the brake coil (31) and brake coil holder (30) partially rest directly against a part of the wall of the drive support (20).

3. The multi-disc brake (3) as a parking or emergency brake according to Claim 1 or 2, wherein an axial length of the brake coil is at most 10% smaller than the axial length (L) of the brake coil holder (30).

4. The multi-disc brake (3) as a parking or emergency brake according to any one of the preceding claims, wherein the cross-sectional area of the brake coil (31) is larger than the brake coil holder area (300).

5. The multi-disc brake (3) as a parking or emergency brake according to any one of the preceding claims, wherein the width in the axial direction (D) of the armature plate (33), the width (B) of the brake coil holder (30) perpendicular to the axial direction (D), and the thickness of the wall of the drive support (20) in the axial direction (D) and in a direction perpendicular to the axial direction (D) are at least approximately equal in size.

6. The multi-disc brake (3) as a parking or emergency brake according to any one of Claims 1 and 3 to 5, wherein the multi-disc brake (3) is designed without a housing, a part of the wall of the drive support (20) surrounds the brake coil (31) on two sides and the brake coil holder (30) on one side, thereby forming a gap.

7. The multi-disc brake (3) as a parking or emergency brake according to any one of the preceding claims, wherein the brake coil (31) is held by a non-ferromagnetic profile on the brake coil holder (30).

8. A vehicle drive (1) for vehicles with torques greater than 800 Nm and speeds less than 60 km/h, comprising a drive housing (2) with a drive support (20), a motor support (21) in which an electric motor (5) is arranged, and a gearbox support (22) in which a gearbox (6) is arranged, wherein the electric motor (5) and the gearbox (6) are arranged connected by a drive shaft (4), **characterised in that**
a multi-disc brake (3) as a parking or emergency brake according to any one of the preceding claims is mounted in an operatively connected manner in the drive support (20) made of a ferromagnetic material, so that when the multi-disc brake (3) is actuated, a magnetic return path in the form of a closed magnetic circuit passing through the brake coil holder (30), the wall of the ferromagnetic drive support (20), which surrounds the brake coil (31) and the brake coil holder (30), and the ferromagnetic armature plate (33) can be formed.

9. The use of a ferromagnetic drive support (20), which is operatively connected to the multi-disc brake (3) according to Claim 1, as part of the multi-disc brake (3), wherein
in a released position and upon actuation of the multi-disc brake (3), the magnetic flux passing through a part of the wall of the drive support (20), the armature plate (33) and the annular brake coil holder (30) is closed to form a magnetic return path, whereby the armature plate (33) is drawn towards the brake coil holder (30) against the spring force of the compression spring (32), and rotation of the drive shaft (4) is enabled,
and in a braking position after release of the multi-disc brake (3), a gap (S) is formed between the armature plate (33) and the brake coil holder (30), as a result of which the armature plate discs (331) are pressed against the drive shaft discs (40) so that rotation of the drive shaft (4) is prevented.

## Revendications

1. Frein à disques multiples (3) en tant que frein de stationnement ou d'urgence, pouvant être monté dans un compartiment intérieur d'un support d' entraînement (20) d'une entraînement de véhicule (1), comprenant un support de bobine de frein annulaire (30) avec une bobine de frein enroulée (31), un plateau d'induit (33) avec un support de disques (330) sur lequel est fixée une pluralité de disques de plateau d'induit (331), sachant qu'un ressort de pression (32) assure un espacement linéaire du support de bobine de frein (30) par rapport au plateau d'induit (33) linéairement mobile fait d'un matériau ferromagnétique dans une position de freinage du frein à disques multiples (3) et une position relâchée du frein à disques multiples (3) peut être générée lors de l'application de courant à la bobine de frein (31) par attraction du plateau d'induit (33) en direction du support de bobine de frein (30), sachant que l'effet de freinage est créé par l'interaction des disques de plateau d'induit (331) avec les disques d'arbre de transmission (40) est créé sur un arbre de transmission (4)
**caractérisé en ce que**
le support d'entraînement (20), le support de bobine de frein (30) et le plateau d'induit (33) sont fabriqués dans un matériau ferromagnétique,
la surface de support de bobine de frein (300) du support de bobine de frein (30) et la surface de section transversale de la bobine de frein (31) sont agencées pour l'essentiel de forme rectangulaire en une branche et lors du montage du frein à disques multiples (3) une partie de la paroi du support d'entraînement (20) entoure la bobine de freinage (31) des deux côtés et le support de bobine de frein (30) d'un côté, et
une monture au moins en trois parties est formée de ce fait à partir de la paroi du support d' entraînement (20), du support de bobine de frein (30) et du plateau d'induit (33) dans laquelle peut être constitué un flux magnétique en tant que circuit magnétique fermé.

2. Frein à disques multiples (3) en tant que frein de stationnement ou d'urgence selon la revendication 1, sachant que le frein à disques multiples est constitué sans carter et la bobine de frein (31) et le support de bobine de frein (30) viennent s'appliquer en partie directement sur une partie de la paroi du support d'entraînement (20).

3. Frein à disques multiples (3) en tant que frein de stationnement ou d'urgence selon la revendication 1 ou 2, sachant qu'une longueur axiale de la bobine de frein est au maximum de 10 % plus petite que la longueur axiale (L) du support de bobine de frein (30).

4. Frein à disques multiples (3) en tant que frein de stationnement ou d'urgence selon l'une quelconque des revendications précédentes, sachant que la surface de section transversale de la bobine de frein (31) est plus grande que la surface de support de bobine de frein (300) .

5. Frein à disques multiples (3) en tant que frein de stationnement ou d'urgence selon l'une quelconque des revendications précédentes, sachant que la largeur en direction axiale (D) du plateau d'induit (33), la largeur (B) du support de bobine de frein (30) perpendiculairement à la direction axiale (D) et l'épaisseur de la paroi du support d' entraînement (20) en direction axiale (D) et dans une direction perpendiculairement à la direction axiale (D) sont au moins à peu près de grandeur identique.

6. Frein à disques multiples (3) en tant que frein de stationnement ou d'urgence selon l'une quelconque des revendications 1 et 3 à 5, sachant que le frein à disques multiples (3) est constitué sans carter, et une partie de la paroi du support d'entraînement (20) entoure la bobine de frein (31) des deux côtés et le support de bobine de frein (30) d'un côté, en formant un interstice.

7. Frein à disques multiples (3) en tant que frein de stationnement ou d'urgence selon l'une quelconque des revendications précédentes, sachant que la bobine de frein (31) est maintenue par un profilé non ferromagnétique sur le support de bobine de frein (30).

8. Entraînement de véhicule (1) pour véhicules avec couples supérieurs à 800 Nm et vitesses inférieures à 60 km/h, comprenant un carter d'entraînement (2) avec un support d'entraînement (20), un support de moteur (21), dans lequel est disposé un moteur électrique (5) et un support de transmission (22) dans lequel est disposée une transmission (6), sachant que le moteur électrique (5) et la transmission (6) sont disposés reliés par un arbre de transmission (4),
**caractérisé en ce qu'**
un frein à disques multiples (3) en tant que frein de stationnement ou d'urgence selon l'une quelconque des revendications précédentes est logé relié de façon fonctionnelle dans le support d'entraînement (20) fait d'un matériau ferromagnétique de telle sorte que lors de l'actionnement du frein à disques multiples (3), un reflux magnétique peut être constitué sous la forme d'un circuit magnétique fermé passant par le support de bobine de frein (30), la paroi du support d'entraînement ferromagnétique (20), lequel entoure la bobine de frein (31) et le support de bobine de frein (30), et par le plateau d'induit ferromagnétique (33).

9. Utilisation d'un support d'entraînement ferromagnétique (20), lequel est relié en fonctionnement à un frein à disques multiples (3) selon la revendication 1 en tant que partie du frein à disques multiples (3), sachant que
dans une position relâchée, le flux magnétique est fermé à un reflux magnétique lors de l'actionnement du frein à disques multiples (3) passant par une partie de la paroi du support d'entraînement (20), le plateau d'induit (33) et le support de bobine de frein annulaire (30), le plateau d'induit (33) étant de ce fait tiré vers le support de bobine de frein (30) en opposition à la force de ressort du ressort de pression (32) et permettant une rotation de l'arbre de transmission (4),
et dans une position de freinage après le relâchement du frein à disques multiples (3), un interstice (S) est créé entre le plateau d'induit (33) et le support de bobine de frein (30), les disques de plateau d'induit (331) étant comprimés de ce fait contre les disques d'arbre de transmission (40) de telle sorte qu'une rotation de l'arbre de transmission (4) est évitée.
